# EUROPÄISCHE PATENTSCHRIFT

(11) **EP 4 514 527 B1**
(45) Veröffentlichungstag und Bekanntmachung des Hinweises auf die Patenterteilung: **20.08.2025**
(21) Anmeldenummer: 23723442.2
(22) Anmeldetag: 26.04.2023
(51) Int. Cl.: B01J 8/02, B01J 8/04, B01J 19/00, C01B 3/02, C01C 1/04

(54) **AMMONIAKKONVERTER FÜR SCHWANKENDEN TEILLASTBETRIEB**
AMMONIA CONVERTER FOR FLUCTUATING PART-LOAD OPERATION
CONVERTISSEUR D'AMMONIAC POUR UN FONCTIONNEMENT FLUCTUANT À CHARGE PARTIELLE

(30) Priorität: 27.04.2022 BE 202205308; 27.04.2022 DE 102022204104
(43) Veröffentlichungstag der Anmeldung: 05.03.2025
(73) Patentinhaber: thyssenkrupp Uhde GmbH, 44141 Dortmund (DE); thyssenkrupp AG, 45143 Essen (DE)
(72) Erfinder: GORVAL, Evgeni, 44135 Dortmund (DE)
(74) Vertreter: thyssenkrupp Intellectual Property GmbH
(86) Internationale Anmeldenummer: PCT/EP2023/060941
(87) Internationale Veröffentlichungsnummer: WO 2023/209003

(56) Entgegenhaltungen:
- EP-A1- 0 314 550
- US-A- 5 135 722
- US-A- 5 250 270

## Beschreibung

Die Erfindung betrifft einen Ammoniakkonverter, der dafür ausgelegt ist, auch bei schwankender Auslastung zuverlässig zu funktionieren. Schwankende Lasten treten beispielsweise auf, wenn der Wasserstoff beispielsweise mittels regenerativ erzeugter Energie mittels Elektrolyse erzeugt wird und somit die zur Verfügung stehenden Edukte von der Wetterlage auch großen Schwankungen unterliegt.

Aus der EP 3 497 392 B2 ist die Verwendung eines Plattenwärmetauschers und einer Synthesevorrichtung zur Herstellung insbesondere von Ammoniak bekannt.

Aus der EP 3 497 058 B1 ist eine Synthesevorrichtung und ein Verfahren zur Herstellung insbesondere von Ammoniak bekannt.

EP0314550A1 beschreibt ein Verfahren für einen katalytischen Reaktor, bei dem Gase radial nach außen durch mindestens ein Katalysatorbett strömen, wobei jedes Katalysatorbett eine zentrale adiabatische Reaktionszone und eine umgebende gekühlte periphere Zone aufweist. Optional kann das Katalysatorbett in mehrere konzentrische, abwechselnd adiabatische und gekühlte Zonen unterteilt sein. Das Verfahren eignet sich insbesondere für die Synthese von Ammoniak und Methanol.

US5250270A beschreibt einen radial durchströmten katalytischen Reaktor mit mehreren Katalysatorbetten, in denen das Gas radial von innen nach außen strömt. Der Reaktor weist einen zentral angeordneten Wärmetauscher auf, der die Wärme zwischen Edukt- und Produktgasen indirekt überträgt. Das System ist speziell auf die Synthese von Ammoniak ausgelegt.

US5135722A beschreibt einen katalytischen Reaktor für die Synthese von Ammoniak oder Methanol mit mindestens zwei axial-radial oder radial durchströmten Katalysatorbetten, die modular aufgebaut und durch zentrale Wärmetauscher zur Temperaturregelung voneinander getrennt sind.

Bei der Ammoniaksynthese wird durch die Umsetzung Energie frei. Je höher die Temperatur ist, desto weiter verschiebt sich aber das Gleichgewicht zu den Edukten. Und übersteigt die Temperatur ein gewisses Maß, können natürlich auch Schäden an der Vorrichtung entstehen. Daher erfolgt die Umsetzung in der Regel in zwei oder mehr Stufen. Zwischen zwei Stufen wird die überschüssige Energie auf kühleres einströmendes Edukt mittels eines Wärmetauschers übertragen.

Für eine normale Synthese ist der Wärmetauscher auf maximale Effizienz ausgelegt, da dieser dadurch besonders klein ausgelegt werden kann, was wiederum mehr Katalysator im Konverter ermöglicht, was wiederum den Umsatz erhöht.

Wird nun ein konventioneller Konverter mit einem schwankenden Eduktstrom konfrontiert, so kann es passieren, dass der Eduktstrom den Produktstrom so weit abkühlt, dass dieser an der nächsten Stufe nicht mehr warm genug ist, beispielsweise unter 370 °C, um weiter umgesetzt zu werden, die Reaktion kommt zum Erliegen. Würde man den Wärmetauscher nun aber kleiner bauen, so würde entweder das kalte eintretende Gas nicht genügend erwärmt werden, sodass die Reaktion zum Erliegen kommen würde, oder der Konverter kann bei Volllast überhitzen und somit beschädigt werden, da das aus der vorhergehenden Stufe austretende Gas nicht ausreichend abgekühlt wird (beispielsweise auf eine Temperatur unterhalb von etwa 525 °C).

Aufgabe der Erfindung ist es, einen Konverter bereit zu stellen, der sowohl bei Volllast als auch bei möglichst geringen Teillasten zuverlässig funktioniert.

Gelöst wird diese Aufgabe durch den Ammoniakkonverter mit den in Anspruch 1 angegebenen Merkmalen. Vorteilhafte Weiterbildungen ergeben sich aus den Unteransprüchen, der nachfolgenden Beschreibung sowie der Zeichnung.

Der erfindungsgemäße Ammoniakkonverter weist eine Hülle auf. Die Hülle ist für die für die Ammoniaksynthese üblichen hohen Drücke relevant und muss gleichzeitig für die Wasserstoff-haltige Atmosphäre und erhöhte Temperaturen ausgelegt sein. Weiter weist der Ammoniakkonverter einen Edukteinlass und einen Produktauslass auf. Es können weitere Nebenedukteinlässe vorgesehen sein, um beispielsweise kühles Eduktgasgemisch beispielsweise direkt dem zweiten Katalysatorbett zuzuführen zu können, um beispielsweise die Temperatur damit regeln zu können. Durch den Edukteinlass wird das Gemisch aus Wasserstoff und Stickstoff (gegebenenfalls mit weiteren Bestandteilen wie Ammoniak oder Argon) zugeführt. Über den Produktauslass wird das Produktgasgemisch aus Ammoniak, Wasserstoff und Stickstoff aus dem Ammoniakkonverter entnommen. Der Ammoniakkonverter weist wenigstens ein erstes Katalysatorbett und ein zweites Katalysatorbett auf. Innerhalb der Katalysatorbetten erfolgt die Umsetzung von Wasserstoff und Stickstoff zu Ammoniak an der Oberfläche des Katalysators. Das erste Katalysatorbett und das zweite Katalysatorbett werden von außen zur Mitte hin radial durchströmt. Das umzusetzende Gasgemisch wird also von der Außenseite aus einem Raum zwischen der Hülle und dem Katalysatorbett dem Katalysatorbett zugeführt. Der Spalt zwischen Hülle und Katalysatorbett dient zur Verteilung des Gasgemisches entlang des Katalysatorbettes. Der Ammoniakkonverter weist wenigstens einen Wärmeaustauscher (erster Wärmetauscher) auf. Der Wärmetauscher ist als Rohrbündelwärmetauscher (erster Rohrbündelwärmetauscher) ausgeführt. Der Rohrbündelwärmetauscher weist ein zentrales Rohr und eine Mehrzahl an Wärmetauschrohren auf. Die Wärmetauschrohre werden in die entgegengesetzte Richtung durchströmt in die das zentrale Rohr durchströmt wird. Die Wärmetauschrohre sind parallel zum zentralen Rohr und um das zentrale Rohr angeordnet. Die Wärmetauschrohre umgeben somit das zentrale Rohr. Der Rohrbündelwärmetauscher weist eine Umlenkvorrichtung auf. Die Umlenkvorrichtung ist gasströmungstechnisch zwischen den Wärmetauschrohren und dem zentralen Rohr angeordnet und ist dazu eingerichtet, den Gasstrom aus den Wärmetauschrohren in das zentrale Rohr zu führen. Dadurch wird das zentrale Rohr in der entgegengesetzten Richtung durchströmt im Vergleich zu der Richtung, in der die Wärmetauschrohre durchströmt werden. Der Rohrbündelwärmetauscher ist ringförmig von dem ersten Katalysatorbett umgegeben, ist also im inneren Kern des ersten Katalysatorbetts angeordnet. Dadurch wird das durch die Reaktion im ersten Katalysatorbett erwärmte Gasgemisch dem Rohrbündelwärmetauscher zugeführt und erwärmt somit das Gasgemisch im Inneren der Rohre.

Erfindungsgemäß ist der Edukteinlass gasströmungstechnisch direkt mit den Wärmetauschrohren verbunden und das zentrale Rohr ist gasströmungstechnisch direkt mit dem Raum zwischen der Hülle und dem ersten Katalysatorbett verbunden. Dass der Edukteinlass gasströmungstechnisch direkt mit den Wärmetauschrohren verbunden ist, bedeutet insbesondere, dass zwischen dem Edukteinlass und den Wärmetauschrohren eben nicht das zentrale erste Rohr angeordnet ist. Ebenso bedeutet, dass das zentrale Rohr gasströmungstechnisch direkt mit dem Raum zwischen der Hülle und dem ersten Katalysatorbett verbunden ist, dass zwischen dem zentralen Rohr und dem Raum zwischen der Hülle und dem ersten Katalysatorbett eben nicht die Wärmetauschrohre angeordnet sind. Dadurch ist der Wärmetauscher ein Gleichstromwärmetauscher, in dem der Gasstrom durch die Wärmetauschrohre in die gleiche Richtung geführt wird wie der Gasstrom, der die Wärmetauschrohre umströmt. In üblichen Konvertern wird der Wärmetauscher als Gegenstromwärmetauscher betrieben, da hierdurch die Größe des Wärmetauschers geringer ausfällt, was wiederum die Menge an Katalysator erhöht und damit die maximale Anlagenkapazität erhöht. Daher erscheint ein Gleichstromwärmetauscher ineffizient. Der Gleichstromwärmetauscher hat aber einen technischen Vorteil. Durch den Gleichstrom haben bei maximalem Wärmeübergang beide Gasströme am Ausgang die gleiche Temperatur. Dadurch kann nicht zu viel Wärme übertragen werden, beide Gasströme haben die Temperatur, die benötigt wird, um jeden der Gasströme bei der Zuführung zum nächsten Katalysatorbett weiter umzusetzen und damit die Reaktion aufrecht zu erhalten. Damit wird auf Kosten eines gewissen Anteils der maximalen Kapazität eine maximale Flexibilität für Teillasten erzielt und damit der Ammoniakkonverter ideal für den Einsatz zur Erzeugung von sogenanntem grünen Ammoniak mittels regenerativ erzeugter Energie.

In einer weiteren Ausführungsform der Erfindung weist der Ammoniakkonverter ein drittes Katalysatorbett auf. Das dritte Katalysatorbett ist zwischen dem ersten Katalysatorbett und dem zweiten Katalysatorbett angeordnet. Der Wärmetauscher weist einen ersten Teilwärmetauscher und einen zweiten Teilwärmetauscher auf. Der erste Teilwärmetauscher ist ringförmig von dem ersten Katalysatorbett umgegeben und der zweite Teilwärmetauscher ist ringförmig von dem dritten Katalysatorbett umgegeben. Der Weg des Gasstromes ist somit vom Edukteinlass durch den Wärmetauscher, genauer durch die Wärmetauschrohre des ersten Teilwärmetauschers, dann durch die Wärmetauschrohre des zweiten Teilwärmetauschers, dann durch das zentrale Rohr. Von dort wird der Gasstrom zwischen die Hülle und das erste Katalysatorbett und dann durch das erste Katalysatorbett geführt. Von dort gelangt er über den Wärmetauscher (genauer gesagt, an der Außenseite der Wärmetauschrohre des ersten Teilwärmetauschers des Wärmetauschers) zwischen die Hülle und das dritte Katalysatorbett und wird dann durch das dritte Katalysatorbett geführt. Von dort gelangt er über den Wärmetauscher (genauer gesagt, an der Außenseite der Wärmetauschrohre des zweiten Teilwärmetauschers des Wärmetauschers) zwischen die Hülle und das zweite Katalysatorbett und wird dann durch das zweite Katalysatorbett geführt. Anschließend wird der Gasstrom dann durch den Produktauslass geführt.

In einer weiteren Ausführungsform der Erfindung ist die gesamte Oberfläche der Wärmetauschrohre für einen ausreichenden Wärmeübertrag für eine Teillast-Kreislaufgasmenge von 10 % der maximalen Kreislaufgasmenge bei Volllast ausgelegt. Ein Wärmeübertrag wird insbesondere dann als "ausreichend" angesehen, wenn die erreichte Temperatur des kalten eintretenden Gases und die erreichte Temperatur des heißen austretenden Gases vor dem Eintritt in ein nachfolgendes Katalysatorbett in einem geeigneten Bereich liegen. Dies kann vor allem dann Fall sein, wenn die gesamte Oberfläche der Wärmetauschrohre bei den jeweiligen Durchflussraten hinreichend groß ist, um auch bei der im Teillastbetrieb auftretenden geringeren Menge an Kreislaufgas einen Wärmeübertrag zu ermöglichen, bei dem das kalte eintretende Gas hinreichend erwärmt wird, so dass die Temperatur des erwärmten Gases eine Reaktion im ersten Katalysatorbett aufrechterhält. Andererseits darf beispielsweise die Temperatur des heißen Gases nach dem (Teil-)Wärmetauscher einen Maximalwert nicht überschreiten, beispielsweise einen Wert von etwa 410 °C, für die jeweilige Anlagenkapazität ist dem Fachmann die Dimensionierung und Auslegung geeigneter Wärmetauschrohre hinlänglich bekannt. Dabei werden grundsätzlich verschiedene Betriebszustände der Anlage berücksichtigt, darunter auch der Betrieb unter Volllast und unter unterschiedlichen Teillasten. Zu den Teillasten gehört unter anderem auch der Grenzfall mit einer Teilkreislaufmenge von 10 % der maximalen Kreislaufgasmenge bei Volllast, wobei der Stoffmengenstrom ("Molstrom") des Kreislaufgases (also der Stoffmengenstrom am Eintritt in den Konverter) auf einen Wert von 10 % verringert wird, verglichen mit dem Normalbetrieb (100 %). Je geringer die mögliche Teillast ist, umso größer muss zwar der Wärmetauscher ausgeführt werden, um zu verhindern, dass der Konverter bei Volllast überhitzt, weil das aus der vorhergehenden Stufe austretende Gas nicht ausreichend abgekühlt wird. Auf der anderen Seite kann der Ammoniakkonverter aber auch noch bei sehr geringen Mengen an zur Verfügung stehender regenerativer Energie weiter betrieben werden, sodass Abschaltzeiten reduziert werden, was wiederum verlustreiches Anfahren vermeidet.

In einer weiteren Ausführungsform der Erfindung weist der Ammoniakkonverter eine maximale Anlagenkapazität von 50 bis 700 Tagestonnen Ammoniak auf. Die maximale Anlagenkapazität ist eine Basisgröße für die Dimensionierung von Ammoniakkonvertern, weshalb diese die für die Bestellung, Planung und Konstruktion eines Ammoniakkonverters maßgebliche Größe darstellt. Damit ist die Erfindung besonders bevorzugt für vergleichsweise kleine Anlagen zur Ammoniaksynthese. Herkömmliche Anlagen erreichen eine Kapazität von 3000 Tagestonnen und mehr. Will man jedoch auf regenerative Energien zurückgreifen, so unterliegen diese zum einen einem zeitlichen Wandel. Zum anderen ist auch die Erzeugung regelmäßig limitiert, beispielsweise durch den zur Verfügung stehenden Platz für Solar- oder Windkraftanlagen. Daher ist davon auszugehen, dass Anlagen, die zur Erzeugung von grünem Ammoniak geplant werden, eher vergleichsweise kleine Konverter benötigen. Hier ergibt sich jedoch eine Synergie zur Erfindung. Da der Konverter in einer druckstabilen Hülle gebaut wird, weisen diese üblicherweise gewissen Größen auf. Das führt dazu, dass bei vergleichsweise kleinen Anlagen zusätzlicher Platz im Konverter vorhanden ist. Damit fällt der Nachteil des erhöhten Platzbedarfs für den erfindungsgemäßen Wärmetauscher nicht nachteilig ins Gewicht.

In einer weiteren Ausführungsform der Erfindung sind der Wärmetauscher auf der von dem aus dem ersten Katalysatorbett austretenden Gas umströmten Seite radial angeordnete Leitelemente zur Erzeugung einer die Wärmetauschrohre überkreuzenden Strömung angeordnet. Durch diese Zick-Zack-Führung wird der Austausch optimiert.

Nachfolgend ist der erfindungsgemäße Ammoniakkonverter anhand eines in der Zeichnung dargestellten Ausführungsbeispiels näher erläutert.

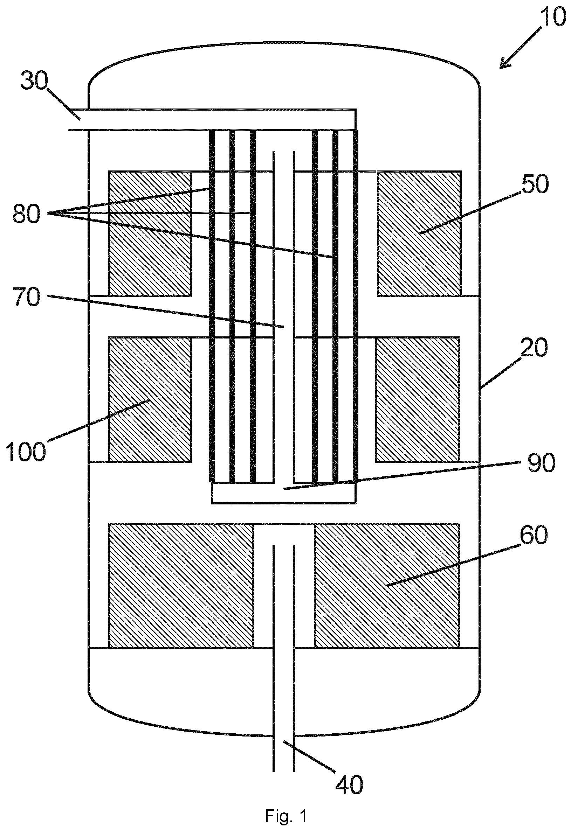

### Fig. 1 Ammoniakkonverter

In Fig. 1 ist ein beispielhafter Ammoniakkonverter 10 im schematischen Querschnitt gezeigt. Die Darstellung ist nicht maßstabsgerecht und dient der Verdeutlichung der Erfindung.

Über einen Edukteinlass 30 wird ein Gemisch aus Wasserstoff und Stickstoff zugeführt. Das Gasgemisch wird in die Wärmetauschrohre 80 geleitet und strömt in diesen nach unten und wird dabei erwärmt. Aus den Wärmetauschrohren 80 wird das erwärmte Gasgemisch mittels der Umlenkvorrichtung 90 zusammen und in das zentrale Rohr 70 geführt. Dort strömt das Gasgemisch nach oben und gelangt über den oberen Bereich dann in den Spalt zwischen Hülle 20 und erstem Katalysatorbett 50. Dort wird der Gasstrom radial durch das erste Katalysatorbett 50 geführt, dort umgesetzt und erwärmt sich dabei. Der aus dem ersten Katalysatorbett 50 austretende Gasstrom gibt seine überschüssige Wärme an die Wärmetauschrohre 80 ab, indem er die Wärmetauschrohre 80 in der gleichen Strömungsrichtung umströmt, in der das Eduktgasgemisch die Wärmetauschrohre 80 durchströmt, und wird in den Spalt zwischen Hülle 20 und drittem Katalysatorbett 100 geführt. Dort wird der Gasstrom radial durch das dritte Katalysatorbett 100 geführt, dort umgesetzt und erwärmt sich dabei. Der aus dem dritten Katalysatorbett 100 austretende Gasstrom gibt seine überschüssige Wärme an die Wärmetauschrohre 80 ab und wird in den Spalt zwischen Hülle 20 und zweiten Katalysatorbett 60 geführt. Dort wird der Gasstrom radial durch das zweite Katalysatorbett 60 geführt, dort umgesetzt und erwärmt sich dabei. Der aus dem zweiten Katalysatorbett 60 austretende Gasstrom wird zum Produktauslass 40 geführt.

### Bezugszeichen

- 10: Ammoniakkonverter
- 20: Hülle
- 30: Edukteinlass
- 40: Produktauslass
- 50: erstes Katalysatorbett
- 60: zweites Katalysatorbett
- 70: zentrales Rohr
- 80: Wärmetauschrohr
- 90: Umlenkvorrichtung
- 100: drittes Katalysatorbett

## Patentansprüche

1. Ammoniakkonverter (10),
wobei der Ammoniakkonverter (10) eine Hülle (20) aufweist,
wobei der Ammoniakkonverter (10) einen Edukteinlass (30) und einen Produktauslass (40) aufweist,
wobei der Ammoniakkonverter (10) wenigstens ein erstes Katalysatorbett (50) und ein zweites Katalysatorbett (60) aufweist,
wobei das erste Katalysatorbett (50) und das zweite Katalysatorbett (60) von außen zur Mitte hin radial durchströmt werden,
wobei der Ammoniakkonverter (10) wenigstens einen Wärmetauscher aufweist, wobei der Wärmetauscher als Rohrbündelwärmetauscher ausgeführt ist,
wobei der Rohrbündelwärmetauscher ein zentrales Rohr (70) und eine Mehrzahl an Wärmetauschrohren (80) aufweist, wobei die Wärmetauschrohre (80) parallel zum zentralen Rohr (70) und um das zentrale Rohr (70) angeordnet sind, wobei der Rohrbündelwärmetauscher eine Umlenkvorrichtung (90) aufweist,
wobei die Umlenkvorrichtung (90) strömungstechnisch zwischen den Wärmetauschrohren (80) und dem zentralen Rohr (70) angeordnet ist,
wobei der Rohrbündelwärmetauscher ringförmig von dem ersten Katalysatorbett (50) umgegeben ist, so dass das durch die Reaktion im ersten Katalysatorbett erwärmte Gasgemisch dem Rohrbündelwärmetauscher zugeführt wird und somit das Gasgemisch im Inneren der Wärmetauschrohre (80) erwärmt,
**dadurch gekennzeichnet, dass**
der Wärmetauscher ein Gleichstromwärmetauscher ist, der eingerichtet ist, dass in ihm der Gasstrom durch die Wärmetauschrohre (80) in die gleiche Richtung geführt wird wie der Gasstrom, der die Wärmetauschrohre (80) umströmt,
wobei der Edukteinlass (30) gasströmungstechnisch direkt mit den Wärmetauschrohren (80) verbunden ist,
wobei die Umlenkvorrichtung (90) eingerichtet ist, den Gasstrom aus den Wärmetauschrohren (80) in das zentrale Rohr (70) zu führen, so dass das zentrale Rohr in der entgegengesetzten Richtung durchströmt wird in der die Wärmetauschrohre durchströmt werden,
wobei das zentrale Rohr (70) gasströmungstechnisch direkt mit dem Raum zwischen der Hülle (20) und dem ersten Katalysatorbett (50) verbunden ist.

2. Ammoniakkonverter (10) nach Anspruch 1, **dadurch gekennzeichnet, dass** der Ammoniakkonverter (10) ein drittes Katalysatorbett (100) aufweist, wobei der Wärmetauscher einen ersten Teilwärmetauscher und einen zweiten Teilwärmetauscher aufweist, wobei der erste Teilwärmetauscher ringförmig von dem ersten Katalysatorbett (50) umgegeben ist, wobei der zweite Teilwärmetauscher ringförmig von dem dritten Katalysatorbett (100) umgegeben ist.

3. Ammoniakkonverter (10) nach einem der vorstehenden Ansprüche, **dadurch gekennzeichnet, dass** die gesamte Oberfläche der Wärmetauschrohre (80) für einen ausreichenden Wärmeübertrag für eine Teillast-Kreislaufgasmenge von 10 % der maximalen Kreislaufgasmenge bei Volllast ausgelegt ist.

4. Ammoniakkonverter (10) nach einem der vorstehenden Ansprüche, **dadurch gekennzeichnet, dass** der Ammoniakkonverter (10) eine maximale Anlagenkapazität von 50 bis 700 Tagestonnen Ammoniak aufweist.

5. Ammoniakkonverter (10) nach einem der vorstehenden Ansprüche, **dadurch gekennzeichnet, dass** der Wärmetauscher auf der von dem aus dem ersten Katalysatorbett (50) austretenden Gas umströmten Seite radial angeordnete Leitelemente zur Erzeugung einer die Wärmetauschrohre (80) überkreuzenden Strömung angeordnet sind.

## Claims

1. An ammonia converter (10),
wherein the ammonia converter (10) has a casing (20),
wherein the ammonia converter (10) has a starting material inlet (30) and a product outlet (40),
wherein the ammonia converter (10) has at least a first catalyst bed (50) and a second catalyst bed (60),
wherein the flow passes through the first catalyst bed (50) and the second catalyst bed (60) radially from the outside to the center,
wherein the ammonia converter (10) has at least one heat exchanger,
wherein the heat exchanger is designed as a tube bundle heat exchanger,
wherein the tube bundle heat exchanger has a central tube (70) and a plurality of heat exchanging tubes (80), wherein the heat exchanging tubes (80) are arranged parallel to the central tube (70) and around the central tube (70),
wherein the tube bundle heat exchanger has a deflection device (90),
wherein the deflection device (90) is arranged between the heat exchanging tubes (80) and the central tube (70) in terms of flow,
wherein the tube bundle heat exchanger is surrounded in a ring shape by the first catalyst bed (50) such that the gas mixture heated by the reaction in the first catalyst bed is fed to the tube bundle heat exchanger and thus heats the gas mixture inside the heat exchanging tubes (80),
**characterized in that**
the heat exchanger is a co-current flow heat exchanger, which is configured in such a way that, in said heat exchanger, the gas flow through the heat exchanging tubes (80) is guided in the same direction as the gas flow flowing around the heat exchanging tubes (80),
wherein the starting material inlet (30) is directly connected to the heat exchanging tubes (80) in terms of gas flow,
wherein the deflection device (90) is configured to guide the gas flow out of the heat exchanging tubes (80) into the central tube (70), such that the flow through the central tube is in the opposite direction to the flow through the heat exchanging tubes,
wherein the central tube (70) is directly connected to the space between the casing (20) and the first catalyst bed (50) in terms of gas flow.

2. The ammonia converter (10) as claimed in claim 1, **characterized in that** the ammonia converter (10) has a third catalyst bed (100), wherein the heat exchanger has a first partial heat exchanger and a second partial heat exchanger, wherein the first partial heat exchanger is surrounded in a ring shape by the first catalyst bed (50), wherein the second partial heat exchanger is surrounded in a ring shape by the third catalyst bed (100).

3. The ammonia converter (10) as claimed in one of the preceding claims, **characterized in that** the total surface area of the heat exchanging tubes (80) is configured for sufficient heat transfer for a partial-load circulating gas quantity of 10% of the maximum circulating gas quantity at full load.

4. The ammonia converter (10) as claimed in one of the preceding claims, **characterized in that** the ammonia converter (10) has a maximum plant capacity of 50 to 700 tonnes of ammonia per day.

5. The ammonia converter (10) as claimed in one of the preceding claims, **characterized in that,** on the side around which the gas emerging from the first catalyst bed (50) flows, on the heat exchanger, radially arranged guide elements are arranged for generating a flow that crosses the heat exchanging tubes (80).

## Revendications

1. Convertisseur d'ammoniac (10),
dans lequel le convertisseur d'ammoniac (10) comporte un boîtier (20),
dans lequel le convertisseur d'ammoniac (10) comporte une entrée de matière première (30) et une sortie de produit (40),
dans lequel le convertisseur d'ammoniac (10) comporte au moins un premier lit catalytique (50) et un deuxième lit catalytique (60),
dans lequel le flux passe à travers le premier lit catalytique (50) et le deuxième lit catalytique (60) radialement de l'extérieur vers le centre,
dans lequel le convertisseur d'ammoniac (10) comporte au moins un échangeur de chaleur,
dans lequel l'échangeur de chaleur est conçu comme un échangeur de chaleur à faisceau tubulaire,
dans lequel l'échangeur de chaleur à faisceau tubulaire comporte un tube central (70) et une pluralité de tubes d'échange de chaleur (80), dans lequel les tubes d'échange de chaleur (80) sont disposés parallèlement au tube central (70) et autour du tube central (70),
dans lequel l'échangeur de chaleur à faisceau tubulaire comporte un dispositif de déviation (90),
dans lequel le dispositif de déviation (90) est disposé entre les tubes d'échange de chaleur (80) et le tube central (70) en termes d'écoulement,
dans lequel l'échangeur de chaleur à faisceau tubulaire est entouré en forme d'anneau par le premier lit catalytique (50) de telle sorte que le mélange gazeux chauffé par la réaction dans le premier lit catalytique est acheminé vers l'échangeur de chaleur à faisceau tubulaire et chauffe ainsi le mélange gazeux à l'intérieur des tubes d'échange de chaleur (80),
**caractérisé en ce que**
l'échangeur de chaleur est un échangeur de chaleur à écoulement co-courant, qui est configuré de telle manière que, dans ledit échangeur de chaleur, le flux de gaz à travers les tubes d'échange de chaleur (80) est guidé dans la même direction que le flux de gaz s'écoulant autour des tubes d'échange de chaleur (80),
l'entrée de matière première (30) étant directement reliée aux tubes d'échange thermique (80) en termes de flux de gaz,
le dispositif de déviation (90) étant configuré pour guider le flux de gaz hors des tubes d'échange thermique (80) dans le tube central (70), de telle sorte que le flux à travers le tube central soit dans la direction opposée au flux à travers les tubes d'échange thermique,
dans lequel le tube central (70) est directement relié à l'espace entre le boîtier (20) et le premier lit catalytique (50) en termes de flux de gaz.

2. Le convertisseur d'ammoniac (10) selon la revendication 1, **caractérisé en ce que** le convertisseur d'ammoniac (10) comporte un troisième lit catalytique (100), dans lequel l'échangeur de chaleur comporte un premier échangeur de chaleur partiel et un deuxième échangeur de chaleur partiel, dans lequel le premier échangeur de chaleur partiel est entouré en forme d'anneau par le premier lit catalytique (50), dans lequel le deuxième échangeur de chaleur partiel est entouré en anneau par le troisième lit catalytique (100).

3. Le convertisseur d'ammoniac (10) selon l'une des revendications précédentes, **caractérisé en ce que** la surface totale des tubes d'échange thermique (80) est configurée pour permettre un transfert thermique suffisant pour une quantité de gaz en circulation à charge partielle égale à 10 % de la quantité maximale de gaz en circulation à pleine charge.

4. Le convertisseur d'ammoniac (10) selon l'une des revendications précédentes, **caractérisé en ce que** le convertisseur d'ammoniac (10) a une capacité maximale de 50 à 700 tonnes d'ammoniac par jour.

5. Le convertisseur d'ammoniac (10) selon l'une des revendications précédentes, **caractérisé en ce que**, sur le côté autour duquel s'écoule le gaz sortant du premier lit catalytique (50), sur l'échangeur de chaleur, des éléments de guidage disposés radialement sont agencés pour générer un écoulement qui traverse les tubes d'échange de chaleur (80).
